# EUROPEAN PATENT APPLICATION

(11) **EP 4 510 539 A1**
(43) Date of publication of application: **19.02.2025**
(21) Application number: 23773565.9
(22) Date of filing: 27.02.2023
(51) Int. Cl.: H04L 67/51

(54) **SMART TOURISM SERVICE METHOD AND APPARATUS, AND STORAGE MEDIUM AND SERVER**

(30) Priority: 22.03.2022 CN 202210279453
(71) Applicant: Cloud Travel (Beijing) Tech. Co. Ltd., Beijing 100101 (CN)
(72) Inventor: SUN, Dejie, Beijing 100015 (CN)
(74) Representative: JD&P Patent Attorneys Joanna Dargiewicz & Partners
(86) International application number: PCT/CN2023/078441
(87) International publication number: WO 2023/179314

(57) **Abstract**

The present disclosure provides a smart tourism service method and apparatus, a storage medium, and a server. The method includes the following steps at a server end: generating at least one piece of tourism project information, where the tourism project information includes tour guide project information and tourist project information; sending the tour guide project information and the tourist project information to a tour guide device end and a tourist device end respectively; receiving group participation information, where the group participation information includes tour guide group participation information sent by the tour guide device end and tourist group participation information sent by the tourist device end; and generating group formation information corresponding to the tourism project information according to the group participation information. The apparatus includes modules corresponding to the method steps. The present disclosure can meet the individual needs of different tour guides and tourists, enhancing both the service quality provided by the tour guides and the tourism experience of the tourists.

## Description

### TECHNICAL FIELD

The present disclosure relates to the technical field of data processing systems or methods suitable for commercial and management purposes, and in particular to a smart tourism service method and apparatus, a storage medium, and a server.

### BACKGROUND

With the improvement of people living standards and cultural literacy, demands for personalized services, high service quality, and cultural experiences in tourism are increasing. Currently, offline tourism methods mainly involve the travel agency or tour guide organizing tour groups for a target scenic spot. Tourists join the group directly, and tour guides then lead the tourists offline. With the advancement of computer technology in tourism, online group start and participation have started to emerge. It is now common for the travel agency or tour guide to upload group start information onto a unified platform, allowing tourists to select and join the group online through the platform and then meet for tours offline. Centralized management and guidance of tourists are required. On one hand, tourists have limited freedom of activity. On the other hand, the travel agency or tour guide needs to monitor each tourist continuously during the tour, which makes management and service challenging. This approach limits the number of tourists and can lead to overcrowding at the site, resulting in various issues and conflicts. There is another way of online tourism that does not involve tour guides, that is, after installing the APP, the location coordinates of the tourist trigger the APP to provide information about the specific scenic spot. Alternatively, the tourists scan QR codes on-site to receive information about the scenic spot. However, this method has many limitations.

### SUMMARY OF PRESENT INVENTION

The technical problem to be resolved by the present disclosure is to overcome the shortcomings of the prior art, and to provide a smart tourism service method and apparatus, a storage medium, and a device, to integrate the personalized requirements of the tour guides and the tourists and improve the quality of tourism services. The present disclosure is also suitable for meeting the needs of various tourists, including the disabled and foreigners, for quality services, particularly when there is an insufficient supply of tour guides.

The present disclosure adopts the following technical solutions.

According to a first aspect, the present disclosure provides a smart tourism service method, including:
generating at least one piece of tourism project information, where the tourism project information includes tour guide project information and tourist project information;
sending the tour guide project information and the tourist project information to a tour guide device end and a tourist device end respectively;
receiving group participation information, where the group participation information includes tour guide group participation information sent by the tour guide device end and tourist group participation information sent by the tourist device end; and
generating group formation information corresponding to the tourism project information according to the group participation information.

Further, the method includes:
obtaining explanation information after target group formation information is generated, where the explanation information is generated by the tour guide device end according to the target group formation information, or the explanation information is generated by the server end according to the target group formation information; and
sending the explanation information to the tourist device end.

In the method, the tourism project information includes, but is not limited to tour group information. In an embodiment, a method for generating the tourism project information is as follows: The tourism project information includes group start time, and a plurality of pieces of tourism project information are generated according to the group start time. For example, a plurality of pieces tourism project information at different moments in a day are set for a scenic spot.

The tour guide project information is information displayed on the tour guide device end in the tourism project information, and may include, depending on actual needs, a scenic spot, group start time, a number of required tour guides, estimated service duration, an explanation fee, and requirements on tour guides such as whether the tour guides need to visit the site. The tourist project information is information displayed on the tourist device end in the tourism project information, and may include, depending on actual needs, introduction to the scenic spot, the group start time, introduction to tour guides, the estimated tour duration, and the explanation fee. The tour guide group participation information is tour guide registration information. The tourist group participation information is tourist registration information. The obtaining the explanation information includes obtaining explanation data generated and uploaded by the tour guide device end before the group start time and/or explanation data generated and uploaded by the tour guide device end after the group start time. The explanation data includes but is not limited to pictures, text, voices, and videos, and the videos include video images, augmented reality (AR) videos, virtual reality (VR) videos, and the like. In order to ensure that the explanation is not disturbed during the tour, preferably, the explanation information is sent to the tourist device end through a one-way information transmission channel, and the tourist device end can only receive the explanation information.

Further, in the method, the generating at least one tourism project information includes:
receiving group start application information sent by the tour guide device end;
generating the at least one tourism project information according to the group start application information, where
the group start application information includes an explanation fee standard, used to calculate an allocation amount for each tourist device end after the target group formation information is generated.

Further, in the method, after the target group formation information is generated, interactive information is obtained, and the interactive information is generated by the tour guide device end and the tourist device end according to the target group formation information. The interactive information includes but is not limited to pictures, text, voices, and videos. The step realizes real-time interaction between the tourists and tour guides.

Further, in the method, the generating the explanation information by the tour guide device end according to the target group formation information includes:
receiving explanation data sent by the tour guide device end;
storing the explanation data;
receiving an editing instruction sent by the tour guide device end; and
according to the editing instruction, editing the explanation data based on a timeline to obtain the explanation information.

The explanation data includes but is not limited to the pictures, text, voices, and videos, and the editing the explanation data based on a timeline refers to setting sending action execution time for all the explanation data in chronological order. In this case, the explanation information is a set of explanation data for which sending action execution time is set. The explanation information generation method allows the tour guide to edit the explanation data for introducing different scenic spots corresponding to different time periods based on previous tour guide experience or big data of tourists and scenic spots provided by the server end. After the explanation information is obtained, the server end sends the explanation information to the on-site tourist device ends. This eliminates the need for repetitive explanations to different groups of tourists at the same scenic spot, enabling the tour guide to focus more on real-time interactions. This approach improves service efficiency and provides on-site tourists with an immersive experience, enhancing the overall travel experience as if the tour guide is serving on-site.

Further, in the method, the receiving the group participation information includes:
receiving a plurality of pieces of tour guide group participation information, where the plurality of pieces of tour guide group participation information are sent by a plurality of tour guide device ends;
determining target tour guide group participation information from the plurality of pieces of tour guide group participation information according to a preset condition; and
determining the target tour guide group participation information and the tourist group participation information as the group participation information, where
the preset condition is any one of the following (1)-(4):
   (1) receiving time of the tour guide group participation information is early;
   (2) a tour guide score corresponding to the tour guide group participation information is high, where the tour guide score is calculated and stored according to tour guide historical service data;
   (3) a tour guide bidding amount corresponding to the tour guide group participation information is high; and
   (4) a tour guide label corresponding to the tour guide group participation information has a high matching degree with a tourism project label, where the tour guide label is generated based on tour guide registration information, and the tourism project label is generated based on the tourism project information.

"Early" mentioned in (1) refers to sorting the information in chronological order from earliest to latest, and selecting the information with higher ranking. For example, if one tour guide is needed, the guide with the earliest receiving time (that is, the top position) is employed. If two tour guides are needed, the two with the earliest receiving time (that is, the top two positions) are employed. "High" mentioned in (2)-(4) refers to sorting the information in the descending order, and selecting the information with higher ranking.

Further, after the group formation information corresponding to the tourism project information is generated according to the group participation information, the method further includes:
receiving evaluation information sent by the tourist device end; and
performing calculation according to the evaluation information and a preset calculation rule, to obtain explanation fee data, where the explanation fee data is used to allocate an explanation fee for the tour guide device end.

Correlating the explanation fee with the tourist evaluation is more conducive to encouraging the tour guides to improve service quality, thus enhancing tourist experience.

Further, after the group formation information corresponding to the tourism project information is generated according to the group participation information, the method further includes:
receiving a reward request sent by the tourist device end;
performing calculation according to the reward request and a preset calculation rule, to obtain reward fee data, where the reward fee data is used to allocate a reward fee for the tour guide device end;
generating reward completion information according to the reward fee data; and
sending the reward completion information to the tourist device end and the tour guide device end.

Further, after the group formation information corresponding to the tourism project information is generated according to the group participation information, the method further includes:
encrypting the group participation information to obtain encrypted group participation information, where the encrypted group participation information includes encrypted tour guide group participation information and encrypted tourist group participation information; and
sending the encrypted tour guide group participation information to the tourist device end, and sending the encrypted tourist group participation information to the tour guide device end, to enable the tour guide device end and the tourist device end to connect and interact according to the encrypted tour guide group participation information and the encrypted tourist group participation information.

The encryption processing mainly focuses on the contact information of the tour guide and tourist. The encrypted tour guide group participation information does not show real contact information of the tour guide. The encrypted tourist group participation information does not show real contact information of the tourist. This method effectively prevents direct contact between the tour guide and the tourist without involving the server. On one hand, the method protects the privacy of both the tour guide and the tourist. On the other hand, this helps ensure that both the tour guide and the tourist remain under the server supervision.

According to a second aspect, the present disclosure provides a smart tourism service apparatus, including:
a project information generation module configured to generate at least one piece of tourism project information, where the tourism project information includes tour guide project information and tourist project information;
a project information sending module configured to send the tour guide project information and the tourist project information to a tour guide device end and a tourist device end respectively;
a group participation information receiving module configured to receive group participation information, where the group participation information includes tour guide group participation information sent by the tour guide device end and tourist group participation information sent by the tourist device end; and
a group formation information generation module configured to generate group formation information corresponding to the tourism project information according to the group participation information.

Further, the apparatus includes:
an explanation information obtaining module configured to obtain explanation information after target group formation information is generated, where the explanation information is generated by the tour guide device end according to the target group formation information, or the explanation information is generated by a server end according to the target group formation information; and
an explanation information sending module configured to send the explanation information to the tourist device end.

Further, the apparatus includes an interactive information obtaining module configured to obtain interactive information after the target group formation information is generated, where the interactive information is generated by the tour guide device end and the tourist device end according to the target group formation information.

Further, the apparatus includes an explanation information generation module configured to cooperate with the tour guide device end to generate the explanation information according to the target group formation information, and the explanation information generation module includes:
an explanation data receiving submodule configured to receive explanation data sent by the tour guide device end;
an explanation data storage submodule configured to store the explanation data;
an editing instruction receiving submodule configured to receive an editing instruction sent by the tour guide device end; and
an editing submodule configured to edit, according to the editing instruction, the explanation data based on a timeline to obtain the explanation information.

Further, in the apparatus, the group participation information receiving module includes:
a group participation information receiving submodule configured to receive a plurality of pieces of tour guide group participation information, where the plurality of pieces of tour guide group participation information are sent by a plurality of tour guide device ends;
a group participation information calculation submodule configured to determine target tour guide group participation information from the plurality of pieces of tour guide group participation information according to a preset condition; and
a group participation information determining submodule configured to determine the target tour guide group participation information and the tourist group participation information as the group participation information, where
the preset condition is any one of the following (1)-(4):
   (1) receiving time of the tour guide group participation information is early;
   (2) a tour guide score corresponding to the tour guide group participation information is high, where the tour guide score is calculated and stored according to tour guide historical service data;
   (3) a tour guide bidding amount corresponding to the tour guide group participation information is high; and
   (4) a tour guide label corresponding to the tour guide group participation information has a high matching degree with a tourism project label, where the tour guide label is generated based on tour guide registration information, and the tourism project label is generated based on the tourism project information.

Further, the apparatus includes:
an evaluation information receiving module configured to receive, after the group formation information corresponding to the tourism project information is generated according to the group participation information, evaluation information sent by the tourist device end; and
an explanation fee generation module configured to perform calculation according to the evaluation information and a preset calculation rule, to obtain explanation fee data, where the explanation fee data is used to allocate an explanation fee for the tour guide device end.

Further, the apparatus includes:
a reward request receiving module configured to receive, after the group formation information corresponding to the tourism project information is generated according to the group participation information, a reward request sent by the tourist device end;
a reward fee generation module configured to perform calculation according to the reward request and a preset calculation rule, to obtain reward fee data, where the reward fee data is used to allocate a reward fee for the tour guide device end;
a reward information generation module configured to generate reward completion information according to the reward fee data; and
a reward information sending module configured to send the reward completion information to the tourist device end and the tour guide device end.

Further, the apparatus includes:
an encryption processing module configured to encrypt, after the group formation information corresponding to the tourism project information is generated according to the group participation information, the group participation information to obtain encrypted group participation information, where the encrypted group participation information includes encrypted tour guide group participation information and encrypted tourist group participation information; and
an encrypted information sending module configured to send the encrypted tour guide group participation information to the tourist device end, and send the encrypted tourist group participation information to the tour guide device end, to enable the tour guide device end and the tourist device end to connect and interact according to the encrypted tour guide group participation information and the encrypted tourist group participation information.

According to a third aspect, the present disclosure further provides a computer-readable storage medium, storing a computer program. The computer program is executed by a processor to perform the method according to any one of the above aspects.

According to a fourth aspect, the present disclosure further provides a server for smart tourism services, including a communication interface, a processor, a storage medium, and a computer program stored in the storage medium, and the computer program is executed by the processor to perform the method according to any one of the above aspects.

### Beneficial effects

Compared with the prior art, the present disclosure has the following beneficial effects:
1. Unlike the previous methods that tourists gather to find the tour guide or the tour guide creates a group to attract tourists, the present disclosure utilizes the server end to generate tourist projects. The projects can be created either by the server administrator or automatically generated according to a preset program within the server. This approach meets the individual needs of different tour guides and tourists, such as selecting specific scenic spots, time periods, or special tour groups. The tour guide no longer needs to handle all aspects of traditional tour groups (such as ticket purchasing, dining, and transportation), but only focuses on providing explanations. This shift revitalizes tour guide resources, reduces physical and financial burdens, increases employment opportunities, and enables tourists to enjoy high-quality tour guide services at a lower cost. Additionally, since the tour guide participates tour groups online to start guide services, it becomes easier to standardize the management of the tour guide team. The tour guide uses the tour guide device end to send the explanation information to the tourist device end via the server. The tourists only need to register online for a specific tourism project at a preferred time period, addressing the challenges and costs associated with finding a good tour guide.
2. In the process of providing tourism services, the explanation information is sent to the tourist device end in a one-way direction, meaning tourists can only receive the explanation information. Only the interactive information can be transmitted between the tour guide and the tourist via the server end, ensuring that interactions between individual tourists and the tour guide do not interfere with other tourist accessing to the explanation information, which could otherwise delay the tour. For example, two channels are established: an explanation channel and an interactive channel. The explanation channel is dedicated to receiving and displaying the explanation information only, while the interactive channel allows for the exchange of interactive information between the tour guide device end and the tourist device end. Some tourists with questions can consult the tour guide via the interactive channel, without affecting other tourists continuing the tour based on the explanation information.
3. The tour guide device end and the tourist device end do not interact directly, but interact with the server end respectively, thus enabling contactless service. The tour guide does not need to be on-site, and can send the explanation information through the server end. This setup ensures safety for both the tour guide and the tourist by reducing personal conflicts, harassment, and the spread of diseases, as well as minimizing disputes. The tourist can follow the explanation information with the tourist device end. Compared to the on-site explanations provided by the tour guide, the information is clearer, provides more detailed instructions about the scenic spot, and is more engaging with multimedia elements. During the tour, the tourist can also interact with the tour guide in real time, receiving continuous support throughout the tour and enhancing the overall travel experience. The tour guide device end and the tourist device end interact with the server end respectively, which can effectively standardize the behavior of both parties, helping to prevent the dissemination of incorrect cultural concepts, historical distortions, and undue pressure on tourists to spend, thus providing quality tour guide services for the tourists. This also helps prevent tourists from being cheated by illegal tourism practices, unethical tour guides, and other market issues. In case of disputes, the interactive data stored on the server can serve as evidence.
4. The tour guide device end and the tourist device end interact through the server end, making it easier to adapt to the personalized tour needs of different tourists. Different tourist can access the explanation information at their own pace and tour the scenic spots following the explanation information, providing greater freedom and avoiding crowding, which enhances convenience, hygiene, and safety.
5. When calculating the explanation fee data, tourist evaluation information is correlated with the explanation fee, and the reward fee data is also included. The tour guide can overcome the challenge of low explanation fee and reliance on shopping rebates to increase the income. Instead, the tour guide can focus more on providing insights into Chinese history and culture at scenic spots, enhancing the professional quality, and offering a better travel experience to the tourists Since the explanation fee and reward fee are calculated at the server end and settled by a third party, there is no direct interaction between the tourist device end and the tour guide device end. This facilitates supervision on the fees and government tax collection.

### BRIEF DESCRIPTION OF THE DRAWINGS

FIG. 1 is a schematic diagram of an interaction mode among a server end, a tour guide device end, and a tourist device end;
FIG. 2 is a schematic diagram of a smart tourism service method according to Embodiment 1;
FIG. 3 is an overall schematic diagram of adding explanation steps to the smart tourism service method according to Embodiment 1;

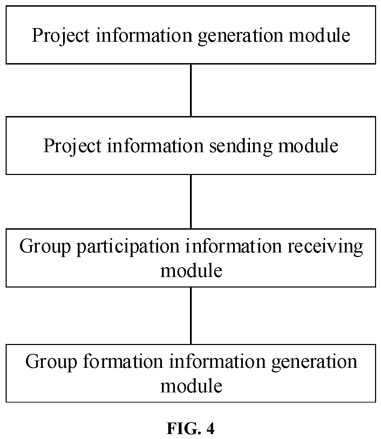

FIG. 4 is a schematic architecture diagram of a smart tourism service apparatus according to Embodiment 2; and

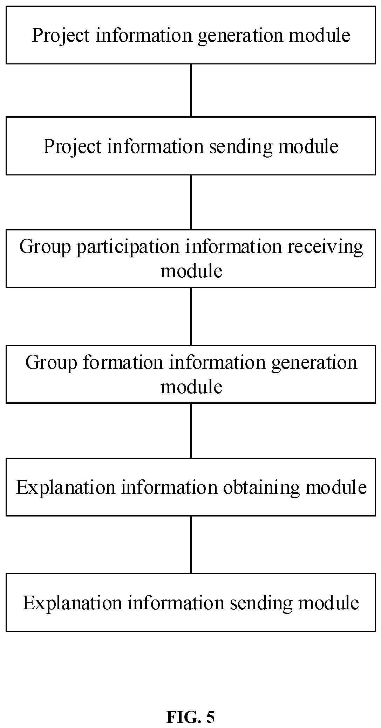

FIG. 5 is a schematic diagram of adding explanation related modules to the architecture of the smart tourism service apparatus according to Embodiment 2.

### DETAILED DESCRIPTION OF THE EMBODIMENTS

The technical solutions of the present disclosure will be described in detail below with reference to preferred embodiments, to facilitate understanding of the present disclosure.

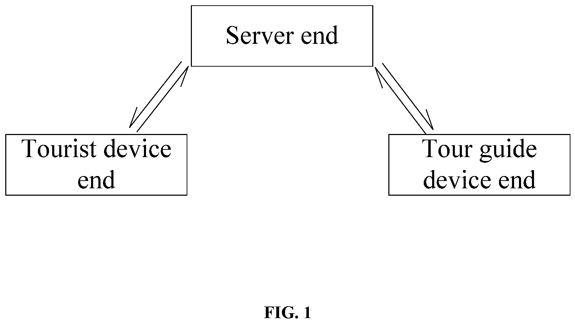

A smart tourism service method provided in the present disclosure is based on the framework of a server end, a tour guide device end, and a tourist device end, and is realized through interaction between the tour guide device end and the server end, and interaction between the tourist device end and the server end, as shown in FIG. 1.

### Embodiment 1

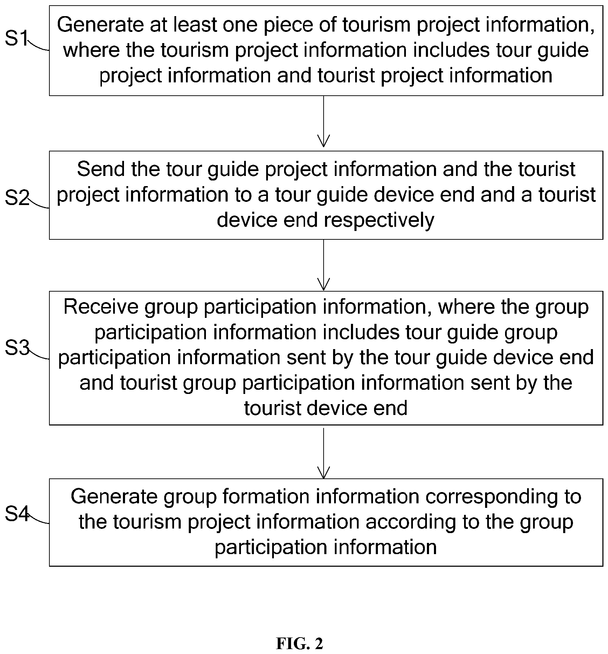

Referring to FIG. 2, a smart tourism service method in Embodiment 1 includes the following steps:
In S1, at least one piece of tourism project information is generated. The tourism project information includes tour guide project information and tourist project information.

Specifically, the tourism project information may include, but not limited to, the introduction to a scenic spot, group start time, tour duration, and characteristics of a tour guide. The tour guide project information is information displayed on the tour guide device end in the tourism project information, and may include the scenic spot, the group start time, the number of required tour guides, the estimated service duration, an explanation fee, and requirements on tour guides such as styles and whether the tour guides need to visit the site. The tourist project information is information displayed on the tourist device end in the tourism project information, and may include the introduction to the scenic spot, the group start time, the number of tour guides, the estimated tour duration, the explanation fee, and payment methods for the explanation fee, such as one-time payment or preferential payment. Preferential payment involves purchasing and paying with a preferential card, which may be named according to the product characteristics, such as the "All-Access Listening Card". The preferential card may be subject to conditions of use, such as being valid only within a specific time period or applicable to a limited range of scenic spots.

In S2, the tour guide project information and the tourist project information are sent to the tour guide device end and the tourist device end respectively.

Specifically, the tour guide device end and the tourist device end may be mobile Internet communication devices configured to receive the tour guide project information and the tourism project information respectively and input tour guide group participation information and tourist group participation information.

In S3, group participation information is received. The group participation information includes the tour guide group participation information sent by the tour guide device end and the tourist group participation information sent by the tourist device end.

Specifically, the tour guide group participation information may be tour guide registration information. The tour guide registration information includes information about a practicing certificate of a tour guide, used for matching with practicing information managed by the cultural tourism management department, to verify the identity and practicing certificate of the tour guide. The tourist group participation information may be tourist registration information, and the tourist registration information includes payment completion information of the explanation fee.

In S4, group formation information corresponding to the tourism project information is generated according to the group participation information.

After the step S4 in Embodiment 1, the method further includes the following steps:
In S5, explanation information is obtained after target group formation information is generated. The explanation information is generated by the tour guide device end according to the target group formation information.

Specifically, the obtaining the explanation information includes obtaining explanation data generated and uploaded by the tour guide device end before the group start time and/or explanation data generated and uploaded by the tour guide device end after the group start time. The explanation data includes but is not limited to pictures, text, voices, and videos, and the videos include video images, AR videos, VR videos and the like.

After the explanation information is generated by the tour guide device end, the explanation information may be directly sent by the tour guide device end to the server end, or the explanation information may be transmitted to the administrator of the server end, and then uploaded by the administrator to storage space corresponding to a registered account of the tour guide on the server end. Alternatively, the explanation information is generated by the administrator of the server end according to the target group formation information.

In S6, the explanation information is sent to the tourist device end.

Specifically, the explanation information is sent to the tourist device end through a one-way information transmission channel. A separate explanation channel may be set up at the tourist device end to receive the explanation information, but information cannot be sent in the channel. The separate explanation channel allows for sending the explanation information to guide the tour route within the scenic spots and help the tourist visit in an organized manner. Explanations to the scenic spots, such as audios, pictures, text, videos, or information with VR or AR scenes, are provided during tour.

An example of specific implementation steps for generating the at least one piece of tourism project information in the step S1 of Embodiment 1 includes:
A plurality of pieces of tourism project information are generated for a scenic spot, and the tourism project information includes the group start time. The plurality of pieces of tourism project information are arranged and displayed in order of the group start time, allowing tourists to choose accordingly. For example, the tourism project information may be generated in batches (setting up groups in batches), and all tourism project information within a preset time range for a scenic spot may be generated at one time.

An example of specific implementation steps for generating the at least one piece of tourism project information in the step S1 of Embodiment 1 includes:
In S11, group start application information sent by the tour guide device end is received.

In S12, the at least one piece of tourism project information is generated according to the group start application information.

The group start application information includes an explanation fee standard, used to calculate an allocation amount for each tourist device end after the target group formation information is generated, and the target group formation information includes the number of tourist device ends.

When the step S11 exists, the tourist project information includes a maximum allocation amount of the explanation fee. In this case, the tourist group participation information may be the tourist registration information, and the tourist registration information includes payment completion information for the highest allocation amount of the explanation fee.

When step S11 exists and the target group formation information is generated, the method further includes a step of sending information about a final allocation amount to the tourist device end. The information about the final allocation amount includes information about a refund amount, and the refund amount is calculated by the server end. A calculation method involves dividing the amount exceeding the explanation fee standard by the number of tourist device ends, and the integer portion of the resulting value is used as the refund amount. The refund amount is used to allocate the final allocation amount for the tourist device end.

The advantage of the specific implementation is that the tour guide can establish a tour group, set the service fee standard, and then allow tourists to sign up. The service fee of the tour guide is shared among the applicants based on the number of applicants. This model is known as the sharing mode, helping reduce the price.

In the step S3 of Embodiment 1, if a plurality of tour guides participate the group and one or more tour guides need to be selected, an example of specific implementation steps for receiving the group participation information includes:
In S31, a plurality of pieces of tour guide group participation information are received. The plurality of pieces of tour guide group participation information are sent by a plurality of tour guide device ends.

In S32, target tour guide group participation information is determined from the plurality of pieces of tour guide group participation information according to a preset condition.

In S33, the target tour guide group participation information and the tourist group participation information are determined as the group participation information.

In the above steps, the preset condition in S32 is any one of the following (1)-(4):
(1) Receiving time of the tour guide group participation information is early. Specifically, the plurality of pieces of tour guide group participation information are sorted by the receiving time from earliest to latest, and the top one or more with the earliest receiving time and the earliest tour guide registration time are selected.
(2) A tour guide score corresponding to the tour guide group participation information is high. The tour guide score is calculated and stored according to tour guide historical service data. Specifically, the tour guide historical data may include evaluations on the tour guide, the number of rewards and reward fees received, the number of tours conducted, the range of scenic spots covered, and the frequency of interactions with tourists. The plurality of pieces of tour guide group participation information are sorted by the tour guide score in the descending order, and the top one or more with higher scores are selected.
(3) A tour guide bidding amount corresponding to the tour guide group participation information is high. Specifically, the bidding amount can be set in the tour guide project information and includes the bidding amount paid by the tour guide. The tour guide group participation information is sorted by the bidding amount in the descending order, and the top one or more with the highest bidding amounts are selected.
(4) A tour guide label corresponding to the tour guide group participation information has a high matching degree with a tourism project label. The tour guide label is generated based on tour guide registration information, and the tourism project label is generated based on the tourism project information.

Specifically, the tour guide registration information includes the name, gender, age, explanation style, explanation specialty, level, language of explanation, range of covered scenic spots, acceptable explanation duration, and acceptable explanation fee of the tour guide. Tour guide labels generated based on the registration information include: a scenic spot range label (a province or region A, a province or region B, or a province or region C), a gender label (male or female), a work experience range label (1-5 years, 6-10 years, or 11-15 years), an explanation duration label (1-2 hours, 3-4 hours, or 5-6 hours), an explanation fee label (300-500 yuan or 501-800 yuan), an explanation style label (a lively and cute style, a humorous style, or a dignified and calm style), and an explanation specialty label (government affairs or red history). The tourism project information may include introduction to the scenic spot, a team theme, the explanation duration, and the gender, experience, age, style, explanation specialty, and explanation fee of the tour guide. The tourism project labels generated based on the tourism project information include: a scenic spot name label (a scenic spot B), a gender label (female), a work experience label (10 years), an explanation style label (dignified and calm), an explanation specialty label (red history), explanation duration (2 hours), and an explanation fee (500 yuan). When matching the tour guide labels with the tourism project labels, a larger number of tourism project labels contained in the tour guide labels indicates a higher matching degree. The plurality of pieces of tour guide group participation information are sorted by the matching degree in the descending order, and the top one or more tour guides with the highest matching degree are selected.

An example of specific implementation steps for generating the explanation information by the tour guide device end according to the target group formation information in the step S5 of Embodiment 1 includes:
In T1, explanation data sent by the tour guide device end is received.

Specifically, the explanation data may generally be pictures, text, voices, videos and the like, and is sent from the tour guide device end to the server end.

In T2, the explanation data is stored.

In T3, an editing instruction sent by the tour guide device end is received.

Specifically, the editing instruction is used for online editing the explanation data stored in the server end.

In T4, according to the editing instruction, the explanation data is edited based on a timeline to obtain the explanation information.

Specifically, sending action execution time may be set for each piece of explanation data in the chronological order, and the obtained explanation information is a set of explanation data for which the sending action execution time is set. The explanation information obtained through editing in the above steps is used to be correlated with the target group formation information, such that the server end sends the explanation data one by one to the tourist device end according to the edited sending action execution time within a preset time period after or before the group start.

An example of implementation steps after the step S5 in Embodiment 1 includes:
In S51, after the target group formation information is generated, interactive information is obtained. The interactive information is generated by the tour guide device end and the tourist device end according to the target group formation information.

Specifically, a separate interactive channel is set at the tourist device end, used to generate and send interactive information to the server end, and also used to receive and display interactive information that is generated and sent by the tour guide device end and received by the server end. Similarly, a separate interactive channel is set at the tour guide device end, used to generate and send interactive information to the server end, and also used to receive and display interactive information that is generated and sent by the tourist device end and received by the server end. In the above step S51, both the tour guide and tourist can generate, send, receive, and display the interactive information. The interactive information includes but is not limited to pictures, text, voices, and videos. Alternatively, there may be a plurality of channels, such as a map channel and a shopping channel. The display positions of the channels may be parallel to those of the explanation channel and the interactive channel, and the display methods are similar.

In S52, matching and screening are performed on the content in the obtained interactive information and a sensitive vocabulary; and a reply time limit is monitored for information with a consulting symbol in the obtained interactive information. The sensitive vocabulary is stored in the server end and includes sensitive words. The consulting symbol is used to direct to a registered account. For example, @+registered account information directs to the registered account for consultation. The registration account is included in the registration information of the tour guide and tourist.

In S53, if the content in the obtained interactive information matches with the sensitive vocabulary, an alarm message is generated for the administrator to check; and if the reply time exceeds a preset value, a reminder message is generated for the administrator to check.

In S54, a management instruction is received from the administrator; and reply information is received from the administrator. The management instruction includes, but is not limited to, actions such as reminding, shielding, deleting, silencing, and removing. The administrator is the server end administrator and can input the management instruction to the server end for execution.

In S55, the management instruction is executed and the reply information of the administrator is sent to the tour guide device end and the tourist device end.

In the management instruction, execution of the reminding instruction may involve sending reminder information to the corresponding registered account. Execution of the shielding instruction may involve not displaying interactive information sent by the corresponding registered account. Execution of the deletion instruction may involve deleting the interactive information sent by the corresponding registered account. Execution of the silencing instruction may involve blacklisting the corresponding registered account and refusing to receive the interactive information sent by the corresponding registered account. Execution of the removing instruction may involve removing the corresponding registered account from a variable list. The variable list is used to maintain registered accounts corresponding to all the tour guide device ends and tourist device ends in the target group formation information.

In the above steps, a plurality of pieces of target group formation information to be detected and served according to needs may be displayed on the server end. For example, the information is filtered and displayed according to cities and scenic spots. The server end, combined with the administrator manual input of management instructions and reply information, improves management and service efficiency.

After the target group formation information is generated, the interactive information is obtained. The interactive information is generated by the tour guide device end and the tourist device end according to the target group formation information.

An example of implementation steps after the step S4 or step S6 in Embodiment 1 includes:
In E1, evaluation information sent by the tourist device end is received.

In E2, calculation is performed according to the evaluation information and a preset calculation rule, to obtain explanation fee data. The explanation fee data is used to allocate an explanation fee for the tour guide device end.

An example of implementation of the performing calculation according to the evaluation information and a preset calculation rule, to obtain explanation fee data includes: calculating the number of tourist device ends × the explanation fee paid by each tourist device end × a preset fee allocation proportion corresponding to an evaluation score × a percentage of the overall evaluation score. For example, the number of tourist device ends is 57 (57 participants), the explanation fee paid by each tourist device end is 15 yuan (each tourist pays 15 yuan), the preset fee allocation proportion corresponding to the evaluation score is α% (the tour guide gets α%), and the percentage of the overall evaluation score is 93% (the overall evaluation score is 93 points, accounting for 93% in the hundred-mark system). In this case, the calculation rule is: 57×15×α%×93%=795.15×α% yuan.

An example of implementation steps after the step S4 in Embodiment 1 includes:
In P1, a reward request sent by the tourist device end is received.

In P2, calculation is performed according to the reward request and a preset calculation rule, to obtain reward fee data. The reward fee data is used to allocate a reward fee for the tour guide device end.

In P3, reward completion information is generated according to the reward fee data.

In P4, the reward completion information is sent to the tourist device end and the tour guide device end

In the above steps, the server end may actively send the reward requesting information to the tourist device end. After receiving the reward requesting information, the tourist device end sends the reward request to the server end in response to the reward requesting information. Alternatively, a reward request sending module may be provided on the tourist device end, and the tourist actively sends the reward request to the server end directly through the reward request sending module.

An example of implementation steps after the step S4 in Embodiment 1 includes:
In M1, the group participation information is encrypted to obtain encrypted group participation information. The encrypted group participation information includes encrypted tour guide group participation information and encrypted tourist group participation information.

Specifically, the encryption processing mainly focuses on the contact information of the tour guide and tourist. The encrypted tour guide group participation information does not show real contact information of the tour guide. The encrypted tourist group participation information does not show real contact information of the tourist. Preferably, the encryption processing may further include, but is not limited to, encryption processing on other information, such as information related to the reward process, personal registration information, geographical position information, and communication information between the tour guide device end and the tourist device end.

In M2, the encrypted tour guide group participation information is sent to the tourist device end, and the encrypted tourist group participation information is sent to the tour guide device end, to enable the tour guide device end and the tourist device end to connect and interact according to the encrypted tour guide group participation information and the encrypted tourist group participation information.

An example of implementation steps after the step S6 in Embodiment 1 includes:
In N1, position information of the tourist device end is obtained.

In N2, the position information of the tourist device end is sent to the tour guide device end.

In N3, a communication request sent by the tour guide device end is received. The communication request directs to a target tourist device end.

In N4, the communication request is sent to the target tourist device end.

In N5, communication between the target tourist device end and the tour guide device end is established after the target tourist device end agrees to the communication.

The position information is GPS coordinate information, and the above implementation steps enable the tour guide to initiate one-way communication with the tourist.

An example of the sending the explanation information to the tourist device end in the step S6 of Embodiment 1 includes:
The position information of the tourist device end is obtained.

First explanation information or second explanation information is sent according to a preset sending rule in combination with the position information. The first explanation information is currently generated by the tour guide device end according to the target group formation information, and the second explanation information is previously generated by the tour guide device end according to the target group formation information.

For example, the preset sending rule may be: sending the first explanation information, sending the second explanation information after specific position information is obtained, and then continuing to send the first explanation information after the second explanation information is sent. The tour guide device end uploads the explanation information (the first explanation information) and sends the same to the tourist device end through the server end. However, when the tourist device end reaches a scenic spot worthy of explanation (for example, when the location coordinates of the tourist device end match the location coordinates of the scenic spot), the explanation information (the second explanation information) related to the scenic spot, uploaded by the tour guide device end in advance and stored in the server end is sent to the tourist device end. The explanation information of the scenic spot has the priority of being sent when the position information is triggered, and the explanation information currently uploaded by the tour guide (the first explanation information) is delayed.

For example, the preset sending rule may alternatively be: sending the second explanation information; when specific position information is obtained, sending the position information to the tour guide device end; and sending the first explanation information if the first explanation information sent by the tour guide device end is obtained, or continuing to send the second explanation information if the first explanation information is not obtained.

### Embodiment 2

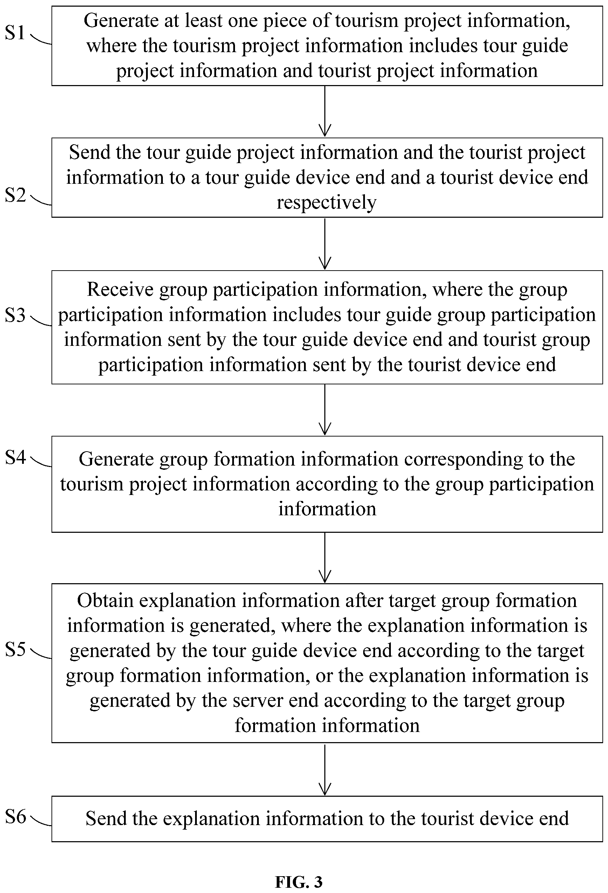

Referring to FIG. 3, a smart tourism service apparatus in Embodiment 2 includes:
A project information generation module configured to generate at least one piece of tourism project information, where the tourism project information includes tour guide project information and tourist project information;
A project information sending module configured to send the tour guide project information and the tourist project information to a tour guide device end and a tourist device end respectively;
A group participation information receiving module configured to receive group participation information, where the group participation information includes tour guide group participation information sent by the tour guide device end and tourist group participation information sent by the tourist device end;
A group formation information generation module configured to generate group formation information corresponding to the tourism project information according to the group participation information;
An explanation information obtaining module configured to obtain explanation information after target group formation information is generated, where the explanation information is generated by the tour guide device end according to the target group formation information; and
An explanation information sending module configured to send the explanation information to the tourist device end.

The group participation information receiving module in Embodiment 2 may further include:
A group participation information receiving submodule configured to receive a plurality of pieces of tour guide group participation information, where the plurality of pieces of tour guide group participation information are sent by a plurality of tour guide device ends;
A group participation information calculation submodule configured to determine target tour guide group participation information from the plurality of pieces of tour guide group participation information according to a preset condition; and
A group participation information determining submodule configured to determine the target tour guide group participation information and the tourist group participation information as the group participation information.

The preset condition is any one of the following (1)-(4):
(1) receiving time of the tour guide group participation information is early;
(2) a tour guide score corresponding to the tour guide group participation information is high, where the tour guide score is calculated and stored according to tour guide historical service data;
(3) a tour guide bidding amount corresponding to the tour guide group participation information is high; and
(4) a tour guide label corresponding to the tour guide group participation information has a high matching degree with a tourism project label, where the tour guide label is generated based on tour guide registration information, and the tourism project label is generated based on the tourism project information.

Embodiment 2 may further include an explanation information generation module configured to cooperate with the tour guide device end to generate explanation information according to the target group formation information, and the explanation information generation module specifically includes:
an explanation data receiving submodule configured to receive explanation data sent by the tour guide device end;
an explanation data storage submodule configured to store the explanation data;
an editing instruction receiving submodule configured to receive an editing instruction sent by the tour guide device end; and
an editing submodule configured to edit, according to the editing instruction, the explanation data based on a timeline to obtain the explanation information.

The explanation data sent by the tour guide device end is generated at the tour guide device end. The tour guide device end may include functional modules for receiving, editing and preparing the explanation data; or may only include a functional module for uploading the explanation data, while the explanation data is generated or stored by a camera module, a video recording module, an audio recording module, an editing module, an audio-visual file storage module, and the like of the tour guide device end.

Embodiment 2 may further include an interactive information obtaining module configured to obtain interactive information after the target group formation information is generated, where the interactive information is generated by the tour guide device end and the tourist device end according to the target group formation information.

Embodiment 2 may further include:
An evaluation information receiving module configured to receive, after the group formation information corresponding to the tourism project information is generated according to the group participation information, evaluation information sent by the tourist device end; and
An explanation fee generation module configured to perform calculation according to the evaluation information and a preset calculation rule, to obtain explanation fee data, where the explanation fee data is used to allocate an explanation fee for the tour guide device end.

Embodiment 2 may further include:
A reward request receiving module configured to receive, after the group formation information corresponding to the tourism project information is generated according to the group participation information, a reward request sent by the tourist device end;
A reward fee generation module configured to perform calculation according to the reward request and a preset calculation rule, to obtain reward fee data, where the reward fee data is used to allocate a reward fee for the tour guide device end;
A reward information generation module configured to generate reward completion information according to the reward fee data; and
A reward information sending module configured to send the reward completion information to the tourist device end and the tour guide device end.

Embodiment 2 may further include:
An encryption processing module configured to encrypt, after the group formation information corresponding to the tourism project information is generated according to the group participation information, the group participation information to obtain encrypted group participation information, where the encrypted group participation information includes but is not limited to encrypted tour guide group participation information and encrypted tourist group participation information; and
An encrypted information sending module configured to send the encrypted tour guide group participation information to the tourist device end, and send the encrypted tourist group participation information to the tour guide device end, to enable the tour guide device end and the tourist device end to connect and interact according to the encrypted tour guide group participation information and the encrypted tourist group participation information.

**Embodiment** 3. A computer-readable storage medium in Embodiment 3 stores a computer program. When executed by a processor, the computer program implements the method of Embodiment 1.

**Embodiment** 4. A server for smart tourism services in Embodiment 4 includes a communication interface, a processor, a storage medium, and a computer program stored in the storage medium. The computer program is executed by the processor to perform the method in Embodiment 1.

The specific example is used herein to illustrate the concept of the present disclosure in detail, and the above embodiments are merely some not all the embodiments, and are only intended to help understand the core idea of the present disclosure. It is to be noted that any apparent modification, equivalent replacement or other improvement made by those of ordinary skill in the art without departing from the concept of the present disclosure and without creative efforts shall fall within the protection scope of the present disclosure.

The smart tourism service method provided in the present disclosure is based on the framework of the server end, the tour guide device end, and the tourist device end, and is realized through interaction between the tour guide device end and the server end, and interaction between the tourist device end and the server end.

## Claims

1. A method for smart tourism service, comprising the following steps at a server end:
generating at least one piece of tourism project information, wherein the tourism project information comprises tour guide project information and tourist project information;
sending the tour guide project information and the tourist project information to a tour guide device end and a tourist device end, respectively;
receiving group participation information, wherein the group participation information comprises tour guide group participation information sent by the tour guide device end and tourist group participation information sent by the tourist device end; and
generating group formation information corresponding to the tourism project information according to the group participation information.

2. The method according to claim 1, further comprising:
obtaining explanation information after target group formation information is generated, wherein the explanation information is generated by the tour guide device end according to the target group formation information, or the explanation information is generated by the server end according to the target group formation information; and
sending the explanation information to the tourist device end.

3. The method according to claim 1 or 2, wherein the generating at least one piece of tourism project information comprises:
receiving group start application information sent by the tour guide device end; and
generating the at least one tourism project information according to the group start application information, wherein
the group start application information comprises an explanation fee standard, used to calculate an allocation amount for each tourist device end after the target group formation information is generated.

4. The method according to claim 2, wherein after the target group formation information is generated, interactive information is obtained, and the interactive information is generated by the tour guide device end and the tourist device end according to the target group formation information.

5. The method according to claim 2, wherein the generating the explanation information by the tour guide device end according to the target group formation information comprises:
receiving explanation data sent by the tour guide device end;
storing the explanation data;
receiving an editing instruction sent by the tour guide device end; and
according to the editing instruction, editing the explanation data based on a timeline to obtain the explanation information.

6. The method according to claim 1, wherein the receiving group participation information comprises:
receiving a plurality of pieces of tour guide group participation information, wherein the plurality of pieces of tour guide group participation information are sent by a plurality of tour guide device ends;
determining target tour guide group participation information from the plurality of pieces of tour guide group participation information according to a preset condition; and
determining the target tour guide group participation information and the tourist group participation information as the group participation information, wherein
the preset condition is any one of the following (1)-(4):
(1) receiving time of the tour guide group participation information is early;
(2) a tour guide score corresponding to the tour guide group participation information is high, wherein the tour guide score is calculated and stored according to tour guide historical service data;
(3) a tour guide bidding amount corresponding to the tour guide group participation information is high; and
(4) a tour guide label corresponding to the tour guide group participation information has a high matching degree with a tourism project label, wherein the tour guide label is generated based on tour guide registration information, and the tourism project label is generated based on the tourism project information.

7. The method according to claim 1 or 2, after the generating group formation information corresponding to the tourism project information according to the group participation information, further comprising:
receiving evaluation information sent by the tourist device end; and
performing calculation according to the evaluation information and a preset calculation rule, to obtain explanation fee data, wherein the explanation fee data is used to allocate an explanation fee for the tour guide device end.

8. The method according to claim 1 or 2, after the generating group formation information corresponding to the tourism project information according to the group participation information, further comprising:
receiving a reward request sent by the tourist device end;
performing calculation according to the reward request and a preset calculation rule, to obtain reward fee data, wherein the reward fee data is used to allocate a reward fee for the tour guide device end;
generating reward completion information according to the reward fee data; and
sending the reward completion information to the tourist device end and the tour guide device end.

9. The method according to claim 1 or 2, after the generating group formation information corresponding to the tourism project information according to the group participation information, further comprising:
encrypting the group participation information to obtain encrypted group participation information, wherein the encrypted group participation information comprises encrypted tour guide group participation information and encrypted tourist group participation information; and
sending the encrypted tour guide group participation information to the tourist device end, and sending the encrypted tourist group participation information to the tour guide device end, to enable the tour guide device end and the tourist device end to connect and interact according to the encrypted tour guide group participation information and the encrypted tourist group participation information.

10. An apparatus for smart tourism service, comprising:
a project information generation module configured to generate at least one piece of tourism project information, wherein the tourism project information comprises tour guide project information and tourist project information;
a project information sending module configured to send the tour guide project information and the tourist project information to a tour guide device end and a tourist device end respectively;
a group participation information receiving module configured to receive group participation information, wherein the group participation information comprises tour guide group participation information sent by the tour guide device end and tourist group participation information sent by the tourist device end; and
a group formation information generation module configured to generate group formation information corresponding to the tourism project information according to the group participation information.

11. The apparatus according to claim 10, further comprising:
an explanation information obtaining module configured to obtain explanation information after target group formation information is generated, wherein the explanation information is generated by the tour guide device end according to the target group formation information, or the explanation information is generated by a server end according to the target group formation information; and
an explanation information sending module configured to send the explanation information to the tourist device end.

12. The apparatus according to claim 10 or 11, further comprising a group start application information receiving module configured to receive group start application information sent by the tour guide device end, wherein the group start application information comprises an explanation fee standard, used to calculate an allocation amount for each tourist device end after the target group formation information is generated.

13. The apparatus according to claim 11, further comprising an interactive information obtaining module configured to obtain interactive information after the target group formation information is generated, wherein the interactive information is generated by the tour guide device end and the tourist device end according to the target group formation information.

14. The apparatus according to claim 11, further comprising an explanation information generation module configured to cooperate with the tour guide device end to generate the explanation information according to the target group formation information, and the explanation information generation module comprises:
an explanation data receiving submodule configured to receive explanation data sent by the tour guide device end;
an explanation data storage submodule configured to store the explanation data;
an editing instruction receiving submodule configured to receive an editing instruction sent by the tour guide device end; and
an editing submodule configured to edit, according to the editing instruction, the explanation data based on a timeline to obtain the explanation information.

15. The apparatus according to claim 10 or 11, wherein the group participation information receiving module comprises:
a group participation information receiving submodule configured to receive a plurality of pieces of tour guide group participation information, wherein the plurality of pieces of tour guide group participation information are sent by a plurality of tour guide device ends;
a group participation information calculation submodule configured to determine target tour guide group participation information from the plurality of pieces of tour guide group participation information according to a preset condition; and
a group participation information determining submodule configured to determine the target tour guide group participation information and the tourist group participation information as the group participation information, wherein
the preset condition is any one of the following (1)-(4):
(1) receiving time of the tour guide group participation information is early;
(2) a tour guide score corresponding to the tour guide group participation information is high, wherein the tour guide score is calculated and stored according to tour guide historical service data;
(3) a tour guide bidding amount corresponding to the tour guide group participation information is high; and
(4) a tour guide label corresponding to the tour guide group participation information has a high matching degree with a tourism project label, wherein the tour guide label is generated based on tour guide registration information, and the tourism project label is generated based on the tourism project information.

16. The apparatus according to claim 11, further comprising:
an evaluation information receiving module configured to receive, after the group formation information corresponding to the tourism project information is generated according to the group participation information, evaluation information sent by the tourist device end; and
an explanation fee generation module configured to perform calculation according to the evaluation information and a preset calculation rule, to obtain explanation fee data, wherein the explanation fee data is used to allocate an explanation fee for the tour guide device end.

17. The apparatus according to claim 11, further comprising:
a reward request receiving module configured to receive, after the group formation information corresponding to the tourism project information is generated according to the group participation information, a reward request sent by the tourist device end;
a reward fee generation module configured to perform calculation according to the reward request and a preset calculation rule, to obtain reward fee data, wherein the reward fee data is used to allocate a reward fee for the tour guide device end;
a reward information generation module configured to generate reward completion information according to the reward fee data; and
a reward information sending module configured to send the reward completion information to the tourist device end and the tour guide device end.

18. The apparatus according to claim 11, further comprising:
an encryption processing module configured to encrypt, after the group formation information corresponding to the tourism project information is generated according to the group participation information, the group participation information to obtain encrypted group participation information, wherein the encrypted group participation information comprises encrypted tour guide group participation information and encrypted tourist group participation information; and
an encrypted information sending module configured to send the encrypted tour guide group participation information to the tourist device end, and send the encrypted tourist group participation information to the tour guide device end, to enable the tour guide device end and the tourist device end to connect and interact according to the encrypted tour guide group participation information and the encrypted tourist group participation information.

19. A computer-readable storage medium, storing a computer program, wherein the computer program is executed by a processor to perform the method according to any one of claims 1 to 9.

20. A server for smart tourism services, comprising a communication interface, a processor, a storage medium, and a computer program stored in the storage medium, and the computer program is executed by the processor to perform the method according to any one of claims 1 to 9.
